# EUROPEAN PATENT APPLICATION

(11) **EP 2 256 295 A2**
(43) Date of publication of application: **01.12.2010**
(21) Application number: 10152025.2
(22) Date of filing: 28.01.2010
(51) Int. Cl.: F01D 5/08, F01D 5/30

(54) **Turbine rotor seal plate with integral flow discourager**

(30) Priority: 07.04.2009 US 419835
(71) Applicant: Honeywell International Inc., Morristown, NJ 07962 (US)
(72) Inventor: Smoke, Jason, Morristown, NJ 07962-2245 (US); Halfmann, Steve, Morristown, NJ 07962-2245 (US); Wakefield, Brandan, Morristown, NJ 07962-2245 (US)
(74) Representative: Buckley, Guy Julian

(57) **Abstract**

A seal plate for a turbine engine (310) is provided. The turbine engine (310) has a central axis (450). The seal plate comprises a forward face extending radially from the central axis (450). The forward face comprises a flat portion extending circumferentially around the central axis (450), and a front flow discourager (512) coupled to the flat portion and extending outward from the flat portion.

## Description

This invention was made with Government support under contract number W911W6-08-2-0001 awarded by the United States Department of Defense. The Government has certain rights in the invention.

### TECHNICAL FIELD

Embodiments of the subject matter described herein relate generally to turbine engines. More particularly, embodiments of the subject matter relate to seal plates for turbine rotors.

### BACKGROUND

It is desirable to increase the efficiency of turbine engines, such as those used in aircraft. One approach for operating turbine engines more efficiently is to increase the speed at which turbine rotors rotate. Another approach is to use increasingly hotter gases within the turbine engine. When increasing rotor speed or gas temperature, however, components of the turbine engine are required to operate under greater stresses and at higher temperatures. Accordingly, durability of the components is a concern when making such changes.

One approach to insure component durability can be to reduce the weight of the rotor. When the speed of the rotor is increased, the rotor components experience increased stress from centrifugal loading. By reducing the weight, the rotor components will experience less stress from increased rotation speed.

Additionally, when the temperature of heated gas passing across the turbine rotor blades is increased, the exposed components of the turbine engine may exhibit decreased turbine material performance. This is due to the mechanical properties of the materials of the components. When higher operating temperatures are combined with higher rotation speeds, the durability of the components can be further affected. Thus, increased heat together with a higher rotating speed of a turbine rotor can cause undesirable turbine material performance in the turbine blades or turbine blade platforms. The operating temperature and speed can be increased without affecting the durability of the components to an undesirable amount by, among other things, reducing the weight of the turbine blade and/or platform, as well as appropriately selecting materials to operate at the increased speed and temperature.

### BRIEF SUMMARY

A seal plate for a turbine engine is provided. The turbine engine has a central axis. The seal plate comprises a forward face extending radially from the central axis. The forward face comprises a flat portion extending circumferentially around the central axis, and a front flow discourager coupled to the flat portion and extending outward from the flat portion.

A seal plate assembly for a turbine engine having a central axis is also provided. The seal plate assembly comprises a forward face extending radially outward relative to the central axis, the forward face comprising a first flat portion extending circumferentially around the central axis, and a front flow discourager coupled to the first flat portion and extending away from the first flat portion, and a rear face extending radially outward relative to the central axis, the rear face comprising a second flat portion extending circumferentially around the central axis, and a rear flow discourager coupled to the second flat portion and extending away from the second flat portion.

A turbine engine assembly having a central axis is also provided. The turbine engine assembly comprises a turbine blade platform having a front terminating in a radially inward direction, and a front seal plate having an integral forward flow discourager.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a perspective view of a prior art turbine rotor and seal plate assembly;

FIG. 2 is a cross-sectional side view of a prior art turbine engine; and

FIG. 3 is a cross-sectional side view of an embodiment of a turbine engine.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

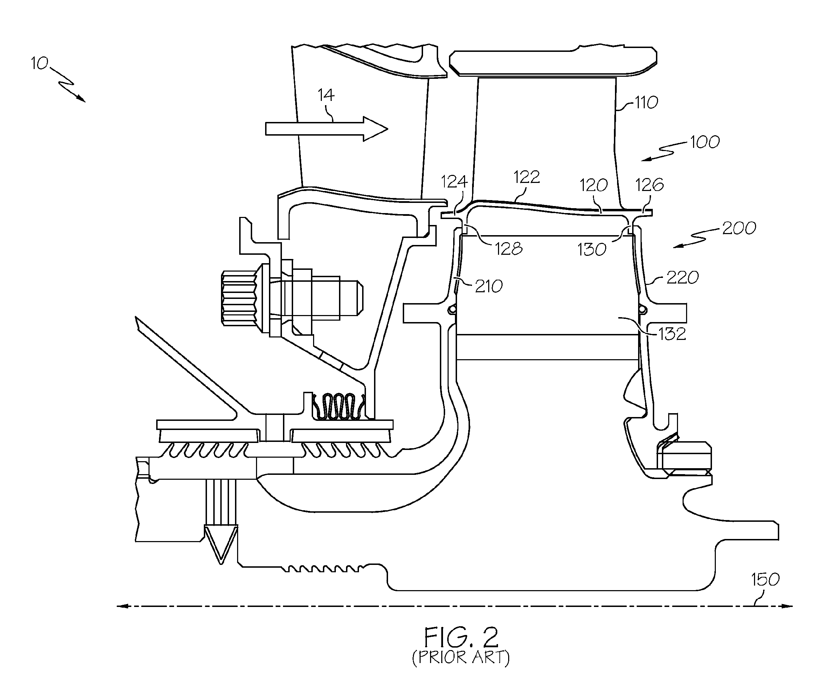

"Coupled" - The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the schematic shown in FIG. 2 depicts one exemplary arrangement of elements, additional intervening elements, devices, features, or components may be present in an embodiment of the depicted subject matter.

"Adjust" - Some elements, components, and/or features are described as being adjustable or adjusted. As used herein, unless expressly stated otherwise, "adjust" means to position, modify, alter, or dispose an element or component or portion thereof as suitable to the circumstance and embodiment. In certain cases, the element or component, or portion thereof, can remain in an unchanged position, state, and/or condition as a result of adjustment, if appropriate or desirable for the embodiment under the circumstances. In some cases, the element or component can be altered, changed, or modified to a new position, state, and/or condition as a result of adjustment, if appropriate or desired.

"Inhibit" - As used herein, inhibit is used to describe a reducing or minimizing effect. When a component or feature is described as inhibiting an action, motion, or condition it may completely prevent the result or outcome or future state completely. Additionally, "inhibit" can also refer to a reduction or lessening of the outcome, performance, and/or effect which might otherwise occur. Accordingly, when a component, element, or feature is referred to as inhibiting a result or state, it need not completely prevent or eliminate the result or state.

In addition, certain terminology may also be used in the following description for the purpose of reference only, and thus are not intended to be limiting. For example, terms such as "upper", "lower", "above", and "below" refer to directions in the drawings to which reference is made. Such terminology may include the words specifically mentioned above, derivatives thereof, and words of similar import. Similarly, the terms "first", "second", and other such numerical terms referring to structures do not imply a sequence or order unless clearly indicated by the context.

One technique to permit increased turbine rotor rotation speed is to decrease the weight of the rotating segment. Certain features of turbine rotors, specifically, of turbine blade platforms, are formed to maintain a flowpath for heated gas. Such features can include flow discouragers. Flow discouragers are typically formed on the leading and trailing edges of turbine blade platforms to inhibit heated gas from traveling out of the desired flowpath and downward toward the rotor's axis of rotation in crevices between the turbine rotor and other components.

When all other factors are held constant, one technique to permit increased turbine rotor rotation speed is reducing the weight of the turbine rotor. Accordingly, it is advantageous to construct an embodiment wherein the flow discouragers are integrally formed with the seal plate abutting the turbine rotor, instead of on the turbine blade platform. By reducing the size and weight of the turbine blade platform, the rotor can operate at a higher speed. When exposed to heated gases at increased temperatures, the efficiency of the turbine engine can be increased further. Therefore, by constructing embodiments of the flow discouragers from high temperature-resistant alloys, the exposed metal components can withstand higher temperature heated gas without a performance decrease. Additionally, a thermal barrier coating can be applied to such alloys. Accordingly, the efficiency of the turbine engine can be increased both by higher rotation speed from the lighter-weight turbine rotor, as well as the higher temperature heated gas passed across the rotor blades.

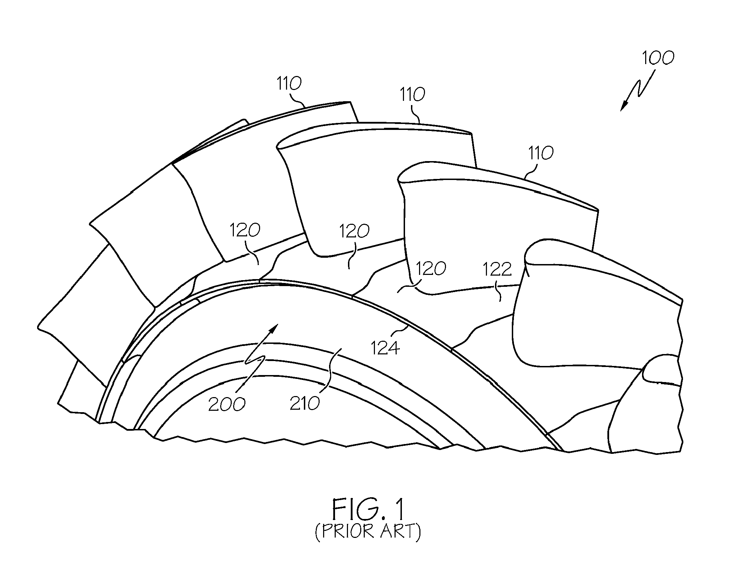

FIGS. 1 and 2 illustrate a turbine rotor 100 and seal plate assembly or seal plate arrangement 200 combination from the prior art. In FIG. 1, the turbine rotor 100 and seal plate arrangement 200 are illustrated as isolated components, whereas in FIG. 2, the turbine rotor 100 and seal plate arrangement 200 are illustrated in the context of a turbine engine 10. The turbine rotor 100 comprises rotor blade airfoils 110 supported by a rotor blade platform 120, and a blade root 132. The seal plate arrangement 200 comprises a front seal plate 210 and rear seal plate 220. The rotor blade platform 120 includes an upper surface 122, a front flow discourager 124 and a rear flow discourager 126. The turbine rotor 100 rotates about a central axis 150.

As can be seen in FIGS. 1 and 2, the front flow discourager 124 is integrally formed with the rotor blade platform 120, as is the rear flow discourager 126. Front and rear are described with respect to the flowpath of heated gas, as illustrated by arrow 14.

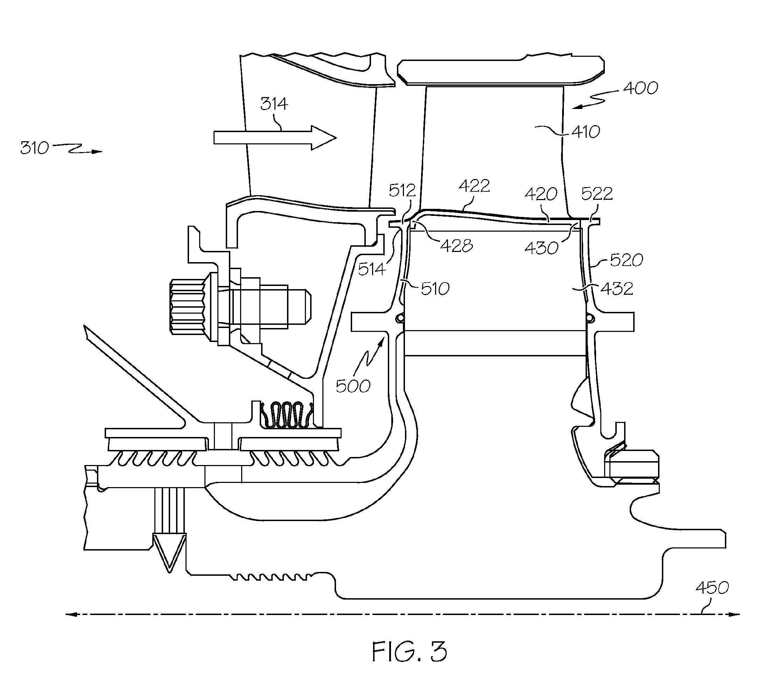

FIG. 3 illustrates an embodiment of a turbine engine 310 having a turbine rotor 400 and seal plate arrangement 500 having front and rear flow discouragers 512, 522 integrally formed with the front 510 and rear 520 seal plates, respectively. Unless otherwise indicated, the reference numerals used in FIG. 3 correspond to those use with regard to FIGS. 1 and 2, except that their sequence has been incremented by 300.

The turbine rotor 400 preferably rotates around the central axis 450. The turbine rotor 400 can have a plurality of rotor blades 410 and rotor blade platforms 420. The rotor blade platforms 420 are preferably positioned side-by-side around the annular shape of the turbine rotor 400. The exact number of each can vary between embodiments, but preferably there are an equal number of rotor blades airfoil 410 and rotor blade platforms 420. The turbine rotor 400 contacts, and is partially surrounded by, the seal plate arrangement 500.

Each rotor blade airfoil 410 preferably extends away from a rotor blade platform 420 in a radially outward direction. As used here, radial and axial directions are described in relation to the central axis 450. A rotor blade airfoil 410 can have any of a variety of cross-sections appropriate for use in the turbine engine 310. The rotor blade airfoils 410 can be hollow and/or comprise a network of conduits for a cooling fluid. Each rotor blade airfoil 410 preferably is coupled to a rotor blade platform 420.

The rotor blade platform 420 preferably has a generally flat surface surrounding each rotor blade airfoil 410. Each rotor blade platform 420 can have curved portions of the upper surface 422, such as those shown in FIG. 3. The upper surface 422 preferably surrounds the base of each rotor blade airfoil 410 and extends to the edge of each rotor blade platform 420. Similar to the rotor blade airfoils 410, the rotor blade platform 420 can be hollow, allowing for a cooling fluid to pass therewithin.

The rotor blade platform 420 can have a front descending portion 428 and a rear descending portion 430. The front descending portion 428 preferably extends radially inward toward the central axis 450. The rear descending portion 430 similarly can extend toward the central axis 450, although, each of the descending portions 428, 430 can extend a different distance toward the central axis 450.

The front descending portion 428 preferably has a flat or substantially flat front surface contacting the front seal plate 510. Similarly, the rear descending portion 430 preferably has a flat or substantially flat rear surface contacting the rear seal plate 520. Unlike FIG. 2, the rotor blade platform 420 does not extend beyond the front or rear seal plates 510, 520. As can be seen in FIG. 2, the front and rear flow discouragers 124, 126 extend beyond the front and rear seal plates 210, 220, respectively. In the embodiment of FIG. 3, the front descending portion 428 is the forwardmost portion of the rotor blade platform 420, terminating against the front seal plate 510. The rear descending portion 430 is the rearwardmost portion of the rotor blade platform 420, terminating against the rear seal plate 520. Accordingly, the rotor blade platform 420 is shorter than in the prior art, resulting in less material required for construction, thereby reducing the weight.

Additionally, the front descending portion 128 of FIG. 2 is longer than the front descending portion 428 of FIG. 3. Because the contact interface between the rotor blade platform 420 and the front seal plate 510 is located a further distance from the central axis 450 than that of rotor blade platform 120 and front seal plate 210, the front descending portion 428 does not have to extend as far to contact the front seal plate 510. Accordingly, less material is required, further reducing the weight of the rotor blade platform 120, allowing for faster rotation of the turbine rotor 400, and increased engine efficiency. Moreover, the blade root 432 can be coupled to a central rotor disk further radially outward, which increases the live rim radius of the rotor disk. Increasing the live rim radius can reduce susceptibility of the rotor to low cycle fatigue.

The seal plate arrangement 500 preferably extends radially outward from the central axis 450 in front of, and behind, the turbine rotor 400. The seal plate arrangement 500 can comprise additional elements and features beyond those described below, including different discrete components coupled thereto as well as some formed integrally. The seal plate arrangement 500 preferably comprises the front and rear seal plates 510, 520, each having a respective integral front and rear flow discourager 512, 522.

The front seal plate 510 preferably extends circumferentially around the central axis 450 in front of the turbine rotor 400, as shown. The front seal plate 510 preferably comprises a planar portion or face in front of the turbine rotor 400, radially inward from, and along, at least a portion of the rotor blade platform 420. The front seal plate can be coupled to the front flow discourager 512. The front flow discourager 512 can extend away from the planar portion to any distance desired for the embodiment. The front flow discourager 512 can be formed with a curved transition 514 from the front seal plate 510, as shown, or can have a different curvature, including a right angle, if desired.

The front flow discourager 512 is preferably integrally formed with the front seal plate 510. The front flow discourager 512 can have a curved upper surface, slowing upward to form a substantially continuous curve with the upper surface 422 of the rotor blade platform 420. The front flow discourager 512 can contact the front descending portion 428 of the rotor blade platform 420, as shown. Certain features of the front flow discourager 512 can vary between embodiments, such as the thickness of the forward-extending portion, the curvature of the upper surface, and the height of the contact surface abutting the rotor blade platform 420.

The front seal plate 510 and front flow discourager 512 are preferably formed of a metal capable of operating in the high-temperature environment of a turbine engine. For example, a superalloy, such as a nickel- or cobalt-based superalloy, can be used. In other embodiments, other superalloys and/or other metals can be used as appropriate, and the embodiment is not limited to the selection of material, including non-metals, for the construction of the components.

In certain preferred embodiments, the front flow discourager 512 can be formed from a different material than the rest of the front seal plate 510. For example, the front flow discourager 512 can be formed as a high temperature-resistant alloy bonded to a powdered metal alloy hub via a diffusion bonding process. One such diffusion bonding process is a hot isostatic press technique. In certain embodiments, the material comprising the front seal plate 510 can be used in the powdered metal alloy formation. For example, in some embodiments, the front seal plate 510 and integral front flow discourager 512 can be formed from a uniform metal, such as a powdered metal alloy. Thereafter, at least one additional metal can be introduced to the front flow discourager 512 portion using diffusion bonding, to form a different material, such as a high temperature-resistant alloy at the front flow discourager 512 portion.

Additionally, a thermal barrier coating can be applied to the front flow discourager 512. The thermal barrier coating can be formed with or without a bonding layer. In certain embodiments, yttria-stabilized zirconia can be used, with different compositions. In other embodiments, different materials can be used.

Through the use of diffusion bonding, as well as other alloy-forming and/or bonding techniques, the front flow discourager 512 can function in higher-temperature environments than otherwise possible. Accordingly, if increased temperature hot gases are passed along the flowpath 314, the turbine engine 310 can operate at a higher efficiency without compromising the effectiveness of the components.

In certain embodiments, the front flow discourager 512 is not integrally formed with the front seal plate 510, and can be coupled to the front seal plate 510 using a variety of acceptable methods. For example, the front flow discourager 512 can be welded, brazed, fastened, or bonded using an adherent. Preferably, however, the front seal plate 510 and front flow discourager 512 are integrally formed. Construction can be done, in certain embodiments, with a single-crystal technique, if desired.

The rear seal plate 520 can surround the central axis 450, and seal the rear of the turbine rotor 400. The rear flow discourager 522 can be coupled to the rear seal plate 520, and preferably, they are integrally formed. The rear seal plate 520 is substantially the same as the front seal plate 510, and the description provided with respect to the front seal plate 510 and front flow discourager 512 can be understood to apply in many respects to the rear seal plate 520 and rear flow discourager 522, except that the flow discouragers extend in different directions from each other.

As can be seen, the rear descending portion 430 can be differently-shaped than the front descending portion 428. Accordingly, the rear flow discourager 522 can include differently-formed features for contacting the rear descending portion 430 at the desired location and interface angle.

Because the front and rear flow discouragers 512, 522 are formed on the front and rear seal plates 510, 520, respectively, as opposed to being formed as part of the turbine rotor 400, the weight of the turbine rotor 400 is reduced. Consequently, the attachment stress for the turbine rotor 400 is lowered, resulting in increased performance of the turbine rotor 400 when responding to centrifugal loading at higher rotation speeds, and other stresses experienced during operation.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A seal plate for a turbine engine (310) having a central axis (450), the seal plate comprising:
a forward face extending radially from the central axis (450), the forward face comprising:
a flat portion extending circumferentially around the central axis (450); and
a front flow discourager (512) coupled to the flat portion and extending outward from the flat portion.

2. The seal plate of Claim 1, wherein the front flow discourager (512) comprises a metal.

3. The seal plate of Claim 2, wherein the front flow discourager (512) is attached using a diffusion bonding technique.

4. The seal plate of Claim 2, wherein the front flow discourager (512) comprises a nickel-based superalloy.

5. The seal plate of Claim 2, wherein the front flow discourager (512) comprises a cobalt-based superalloy.

6. The seal plate of Claim 1, wherein the front flow discourager (512) comprises a thermal barrier coating.

7. The seal plate of Claim 6, wherein the thermal barrier coating comprises yttria-stabilized zirconia.

8. The seal plate of Claim 1, wherein the flat portion and the front flow discourager (512) comprise different materials.

9. A seal plate assembly for a turbine engine (310) having a central axis (450), the seal plate assembly comprising:
a forward face extending radially outward relative to the central axis (450), the forward face comprising:
a first flat portion extending circumferentially around the central axis (450); and
a front flow discourager (512) coupled to the first flat portion and extending away from the first flat portion; and
a rear face extending radially outward relative to the central axis (450), the rear face comprising:
a second flat portion extending circumferentially around the central axis (450); and
a rear flow discourager (522) coupled to the second flat portion and extending away from the second flat portion.

10. A turbine engine assembly (310) having a central axis (450) comprising:
a turbine blade platform (420) having a front terminating in a radially inward direction; and
a front seal plate (510) having an integral forward flow discourager (512).
